# EUROPEAN PATENT APPLICATION

(11) **EP 4 130 171 A1**
(43) Date of publication of application: **08.02.2023**
(21) Application number: 21774021.6
(22) Date of filing: 23.03.2021
(51) Int. Cl.: C09D 7/63, C09D 5/00, C09D 201/00, C09D 7/61, C08K 9/08, C08K 7/26, C08K 3/36, C08K 3/013, C08L 71/02

(54) **THERMAL INSULATION COATING COMPOSITION HAVING EXCELLENT WATER RESISTANCE**

(30) Priority: 23.03.2020 KR 20200035005
(71) Applicant: Extol Co., Ltd., Gyeonggi-do 15657 (KR)
(72) Inventor: HUR, Wook Hwan, Gyeonggi-do 15483 (KR); LEE, Chungsub, Gyeonggi-do 15454 (KR); JEONG, Seongyo, Gyeonggi-do 15556 (KR); JIN, Kyoungdong, Gyeonggi-do 15587 (KR)
(74) Representative: Schön, Christoph
(86) International application number: PCT/KR2021/003535
(87) International publication number: WO 2021/194198

(57) **Abstract**

The present invention provides a thermal insulation coating composition and a thermal insulation material comprising same, the composition comprising: an aerogel surface-treated with a polyoxyethylene alkyl ether (PEO) of chemical formula 1; a silica filler; an inorganic pigment; a polymer resin; and a dispersion medium. The thermal insulation coating composition according to the present invention comprises a surface-treated aerogel so as to exhibit good miscibility between components and improved stability, thereby providing excellent water resistance together with the characteristic thermal insulation performance of aerogel, and thus can improve dew-proof characteristics that suppress dew condensation.

## Description

### Technical Field

This application claims the benefit of priority from Korean Patent Application No. 10-2020-0035005, filed on March 23, 2020, the entire disclosure of which is incorporated by reference herein.

The present invention relates to a thermal insulation coating composition having excellent water resistance, and in particular a thermal insulation coating composition that provides excellent water resistance by including surface-modified aerogels, to prevent deterioration of thermal insulation performance due to moisture and minimize heat loss, thereby improving anti-condensation properties.

### Background Art

Recently, aerogels having excellent insulation properties are used as most of thermal insulation materials used for industrial or home use.

The aerogels are transparent or translucent ultra-low-density advanced materials having a nano-porous structure, a porosity of 90% or more, and a specific surface area of several hundred to about 1,000 m²/g. However, due to high brittleness, aerogels are very weak in strength, such as being easily broken even by a small impact, so it is difficult to process them into various thicknesses and shapes. Therefore, in spite of excellent thermal insulation properties, aerogels alone are difficult to apply as a thermal insulation material, so it is used in the form of a composite mixed with other materials.

On the other hand, the surface of the aerogel powder exhibits hydrophobicity and porosity, making it difficult to achieve stable dispersion when mixed with a binder material. That is, in case of using a water-soluble binder, it is difficult to mix with aerogels due to hydrophobic properties of aerogel that do not mix with water. To overcome it, in case of using a hydrophobic organic binder, the hydrophobic aerogels mix well with the organic binder, but the organic binder with fluidity penetrates into numerous micropores of the aerogel. The organic binder penetrated into the numerous micropores of the aerogel is difficult to remove because of surface tension and the characteristic thermal insulation performance of aerogel may be lowered.

Accordingly, it is necessary to ensure excellent physical properties, including thermal insulation performance, by modifying surface properties of aerogel sot that it can be well mixed with other components.

### Detailed Description of the Invention

### Technical Problem

An object of the present invention is to provide a coating composition capable of imparting excellent water resistance with the thermal insulation performance by using the surface-treated aerogel to have good miscibility with other components.

### Solution to Problem

One aspect of the present invention provides a thermal insulation coating composition comprising an aerogel surface-treated with a polyoxyethylene alkyl ether (PEO) of chemical formula 1; a silica filler; an inorganic pigment; a polymer resin; and a dispersion medium, wherein the silica filler is in the form of glass bubble containing soda lime and borosilicate, and the surface-treated aerogel and the silica filler has a weight ratio of 1: 4 to 1: 15: 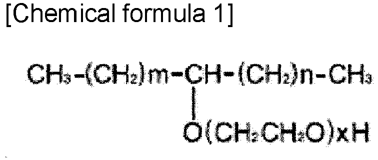 wherein m+n is 9 to 20 and x is 1 to 25.

In addition, the present invention provides a thermal insulation material comprising the thermal insulation coating composition.

### Effect of the Invention

The thermal insulation coating composition according to the present invention comprises the surface-treated aerogel with PEO so as to exhibit good miscibility between components and improved stability, thereby providing excellent water resistance together with the characteristic thermal insulation performance of aerogel, and thus can improve anti-condensation characteristics that suppress dew condensation.

### Brief Description of Drawings

Figs. 1 and 2 show a comparison of the thermal insulation performance according to the temperature when uncoated or coated with the thermal insulation coating composition according to Example of the present invention.
Fig. 3 shows a comparison of the degree of artificial dew condensation according to water resistance when coated with the thermal insulation coating composition according to Example 1 and commercially available products to the same thickness, respectively.
Figs. 4a and 4b show a comparison of temperature difference between surface temperature and inside temperature for each coating when dew condensation occurs in cases of coating with the thermal insulation coating composition according to Example 1 and commercially available products to the same thickness, respectively.
Fig. 5 shows a comparison of adhesion durability according to water resistance when coated with the thermal insulation coating composition according to Example 1 and commercially available products to the same thickness, respectively.

### Best Mode for Carrying out the Invention

The present invention may have various modification and various embodiments and specific embodiments will be illustrated in the drawings and described in detail. However, this is not intended to limit the present invention to specific embodiments, and should be understood to include all modifications, equivalents, and substitutes included in the spirit and scope of the present invention. In describing the present invention, if it is determined that a detailed description of a related known technology may obscure the gist of the present invention, the detailed description thereof will be omitted.

Hereinafter, the present invention will be described in more detail.

The composition according to an embodiment of the present invention comprises a surface-treated aerogel, a silica filler, an inorganic pigment, a polymer resin, and a dispersion medium.

Based on the total weight of the composition, the composition may contain 0.1 to 10.0 wt% of the surface-treated aerogel, 15.0 to 20 wt% of the silica filler, 5.0 to 10.0 wt% of the inorganic pigment, 10.0 to 20.0 wt% of the polymer resin, and 45.0 to 60.0 wt% of the dispersion medium.

The aerogel contained in the composition may have a porous network structure and contain 90% or more of air therein. For example, hydrophobic silica aerogel can be used.

The aerogel may have a porosity of 80% to 99%, preferably 85% to 97%, a density of 0.001 to 0.5 g/cm³, preferably 0.005 to 0.35 g/cm³, and an internal surface area of 200 to 2000 m²/g, preferably 400 to 1800 m²/g.

The aerogel may be in the form of a powder having an average particle diameter of 50 nm to 100 µm, preferably 1 to 50 µm, and more preferably 10 to 45 µm. When the average particle diameter of the aerogel satisfies the above range, it is advantageous for formation of pores exhibiting the inherent properties of aerogel and dispersion when mixed with other materials, and an increase in surface roughness and a decrease in mechanical properties can be prevented when applied as a thermal insulating material.

In addition, the pore size of the aerogel may be 1 to 100 nm, preferably 5 to 60 nm, more preferably 10 to 50 nm. Here, the pore size of the aerogel means the average pore diameter. When the pore size of the aerogel satisfies the above range, it is possible to exhibit effective thermal insulation performance by suppressing air convection without increasing heat conduction while ensuring stable physical properties and dispersibility.

The pore volume in the aerogel may be 1 to 10 cm³/g, preferably 1.5 to 7 cm³/g, more preferably 2 to 4 cm³/g. When the pore volume satisfies the above range, it is possible to exhibit the thermal insulation effect by minimizing the heat conduction path through sufficiently securing the space occupied by the air, and it is possible to prevent the deterioration of thermal insulation effect due to air convection due to excessively large pores.

In general, it is difficult to achieve stable dispersion when mixing with other materials such as a binder because aerogels used as thermal insulation materials have a porous structure and a hydrophobic particle surface as described above.

Therefore, in the present invention, an aerogel surface-treated with polyoxyethylene alkyl ether of chemical formula 1 is used having the characteristics as described above: 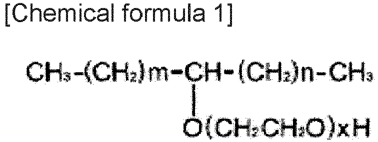 wherein m+n is 9 to 20 and x is 1 to 25.

The polyoxyethylene alkyl ether having the structure of chemical formula 1 is also called polyethylene oxide (PEO), and is an amphoteric organic compound having both a hydrophobic group and a hydrophilic group in the chain. Therefore, the hydrophilic group can interact with water and the hydrophobic group can interact with the hydrophobic surface of the aerogel, thereby improving dispersibility while controlling the hydrophobicity of aerogel in the aqueous solution. In addition, since the polyoxyethylene alkyl ether of chemical formula 1 has a long-chain molecular structure, solvents or binders cannot easily penetrate into the pores of aerogel, resulting in protecting the internal pores. With these properties, it is possible to improve miscibility with solvents and binders without deteriorating the characteristic thermal insulation properties of aerogel.

In one embodiment of the present invention, examples of the polyoxyethylene alkyl ether include polyoxyethylene lauryl ether, polyoxyethylene cetyl ether, and polyoxyethylene oleyl ether, or a mixture thereof.

In addition, in the chemical formula 1, m+n may be 9 to 11 and x may be 1 to 14.

In the composition according to an embodiment of the present invention, the polyoxyethylene alkyl ether used for surface treatment of the aerogel may be present in an amount of 0.7 to 5 parts by weight, such as 1 to 3 parts by weight, based on 100 parts by weight of the aerogel. When the content of the polyoxyethylene alkyl ether satisfies the above range, the effect of controlling hydrophobicity of the aerogel surface may be exerted. When the polyoxyethylene alkyl ether is used in excess, layer separation may occur and the pores of the aerogel may be impregnated with an organic binder or a solvent, thereby impairing the characteristic thermal insulation performance of aerogel.

In the thermal insulation coating composition according to an embodiment of the present invention, the silica filler is low-density particles in the form of glass bubble containing soda Na₂CO₃, lime such as CaO, MgO, Al₂O₃ and borosilicate.

The density of the silica filler in the form of glass bubble is preferably 0.1 to 0.5 g/cc, more preferably 0.1 to 0.3 g/cc, or 0.1 to 0.2 g/cc.

The silica filler may have a particle diameter of 5 to 120 µm, and D50 of 30 to 70 µm. Preferably, D50 may be between 40 and 70 µm or between 50 and 65 µm.

Such a silica filler has excellent water resistance to achieve stable emulsion formation of the composition, exhibit non-porosity and non-combustion (fire resistance) to not absorb the polymer resin component contained in the composition, and have low alkalinity and excellent compatibility with most resins, thereby stabilizing the viscosity of the composition and extending the shelf life.

In particular, the glass bubble form of the silica filler that has a unique spherical shape of a fine hollow glass sphere enables high loading in the composition. It minimizes the viscosity increase of the polymer resin to promote low viscosity and flow improvement of the composition, thereby enabling reduction of shrinkage and reduction of warpage during coating of the composition.

The silica filler is commercially available and can be used, for example, silica fillers of 3M's K series (K1, K15, K20, K25, K37, K46, etc.).

In the thermal insulation coating composition according to an embodiment of the present invention, the surface-treated aerogel and the silica filler may be present in a weight ratio of 1: 4 to 1: 15. Such a high content of the filler is advantageous because it can sufficiently provide anti-condensation properties due to heat insulation. If the silica filler is used in an amount less than the above weight ratio, coating properties or water resistance may be poor, and if used in an excess of the above weight ratio, it may be difficult to satisfy the intended anti-condensation properties because of the reduced adhesion strength after coating of the composition.

In the thermal insulation coating composition according to an embodiment of the present invention, the inorganic pigment serves to improve impact strength of the dried film after coating, and may include dolomite, magnesium carbonate, titanium dioxide, or a mixture thereof.

In the thermal insulation coating composition according to an embodiment of the present invention, the polymer resin serves to improve strength by compensating for weak brittleness of aerogel and to secure adhesion to the substrate of the coating composition, and it may include polyvinyl alcohol (PVA), ethylene-vinyl acetate copolymer, cellulose, silicone, acrylate resin, urethane resin, epoxy resin, polyimide or a mixture thereof.

In the thermal insulation coating composition according to an embodiment of the present invention, the dispersion medium may include water, ethylene glycol, or a mixture thereof. These dispersion mediums may be used in an amount of 45.0 to 60.0% by weight based on the total weight of the composition, and accordingly, the thermal insulation coating composition of the present invention may be in the form of a paste having a solid content of 25% to 50%. The composition in the form of a paste is advantageous in terms of workability because it is easy for users to handle during coating.

The thermal insulation coating composition of the present invention comprising the components as described above can impart excellent water resistance along with thermal insulation performance without emission of harmful substances such as VOC, RoHS, and halogen substances. Thereby, it is possible to realize excellent anti-condensation properties by minimizing heat loss while preventing deterioration of thermal insulation performance due to moisture.

For example, the thermal insulation coating composition of the present invention may be coated with 0.5 to 3 m²/L on cement, concrete, mortar, etc. and dried at 25 °C for 24 hours to obtain a coating film having a thickness of 0.5 to 3 mm. The coating film may exhibit excellent thermal insulation performance in the range of 0.03 to 0.06 W/m·K of thermal conductivity measured by ASTM E1461. In addition, the coating film has excellent water resistance and improved anti-condensation properties that does not cause dew condensation in an artificial dew condensation evaluation test with a refrigerant temperature of 9 °C using the temperature and humidity chamber at a temperature of 30 °C and a humidity of 75%.

The thermal insulation coating composition of the present invention can be used as an eco-friendly insulating material having excellent thermal insulation performance at room temperature, low temperature and high temperature.

Accordingly, the present invention provides a thermal insulation material comprising the thermal insulation coating composition as described above. The thermal insulation material has excellent thermal insulation performance and water resistance in various industrial fields, so that it can be used as a functional material for improving anti-condensation properties.

### Mode for Carrying out the Invention

Hereinafter, embodiments of the present invention will be described in detail so that those of ordinary skill in the art can easily carry out the present invention. However, the present invention may be embodied in several different forms and is not limited to the embodiments described herein.

### Example 1:

5% by weight of a surface-treated aerogel obtained by surface treatment with 5 parts by weight of polyoxyethylene lauryl ether relative to 100 parts by weight of silica aerogel particles, 20% by weight of a silica filler (K15, 3M), 6% by weight of dolomite (SDP-400, SY) as an inorganic pigment, 14.4% by weight of polyvinyl alcohol (PVA) as a polymer resin, and 54.6% by weight of water as a dispersion medium are placed in a mixing head and stirred at 2,000 rpm for 20 minutes to prepare a paste-like thermal insulation coating composition having a solid content of 45.4%.

The prepared thermal insulation coating composition had a thermal insulation coating composition had a thermal conductivity of 0.042 W/m·K measured by ASTM E1461, a density of 0.40 g/ml, and a total volatile of organic compound (TVOC) of 0.046 mg/m²h.

### Experimental Example 1: Evaluation of thermal insulation performance

The thermal insulating coating composition prepared in Example 1 was coated on the surface of a sealed acrylic box and dried at 25 °C for 24 hours to obtain a coating film having a thickness of 3 mm.

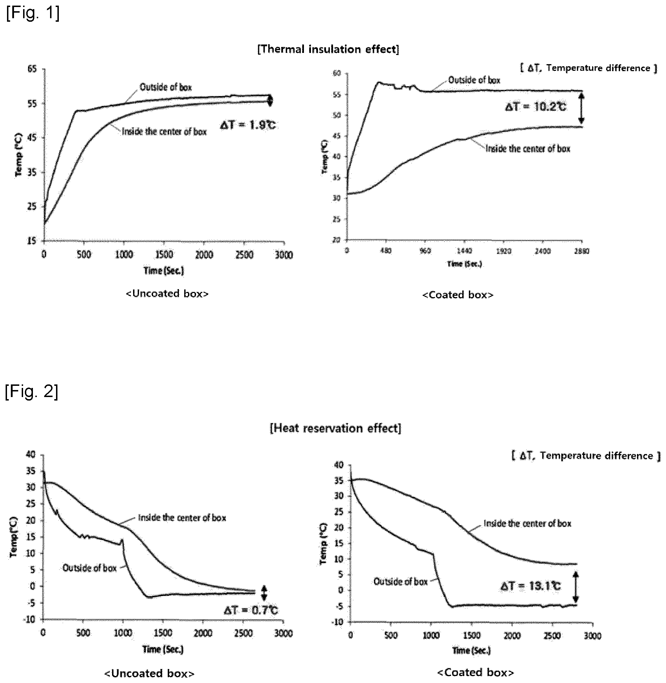

Thereafter, the acrylic box coated with the thermal insulation coating composition of Example 1 and the uncoated acrylic box were placed in a constant temperature chamber, respectively, and exposed to high temperature (50 °C) and low temperature (-10 °C) to measure the temperature change of inside of the box. The results are shown in Figs. 1 and 2.

Fig. 1 shows a comparison of the thermal insulation performance in a high-temperature environment of 50 °C when uncoated or coated with the thermal insulation coating composition according to Example of the present invention.

In Fig. 1, the uncoated box of comparative example had a temperature difference of only 1.9 °C between inside temperature and outside temperature (50 °C) of the box, whereas the coated box with the thermal insulation coating composition of Example 1 showed a temperature difference of 10.2 °C. It can be seen that the thermal insulation effect is excellent by maintaining low temperature of inside of the box against high temperature of outside of the box.

Fig. 2 show a comparison of the thermal insulation performance in a low-temperature environment of -10 °C when uncoated or coated with the thermal insulation coating composition according to Example 1.

In Fig. 2, the uncoated box of comparative example had a temperature difference of only 0.7 °C between inside temperature and outside temperature (-10 °C) of the box, whereas the coated box with the thermal insulation coating composition of Example 1 showed a temperature difference of 13.1 °C. It can be seen that the thermal insulation effect is excellent by maintaining high temperature of inside of the box against low temperature of outside of the box.

### Experimental Example 2: Evaluation of dew condensation prevention performance

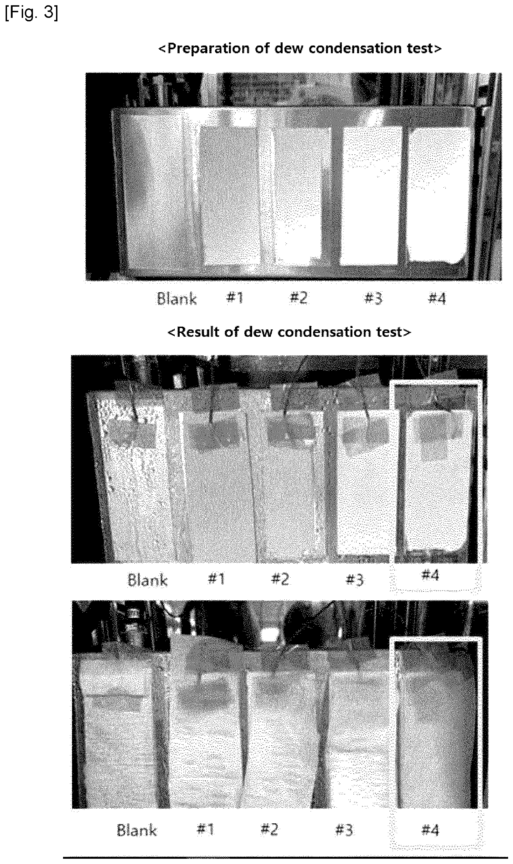

The thermal insulation coating composition prepared in Example 1 and commercially available products were coated to the same thickness of 3 mm on an acrylic plate, respectively, dried at 25 °C for 24 hours, and then placed in a temperature and humidity chamber at a temperature of 30 °C and a humidity of 75% with a refrigerant temperature of 9 °C. The occurrence of artificial dew condensation was evaluated. Here, the surface temperature of the blank was 18.2 °C. The results are shown in Tables 1 to 2 and Figs. 3 to 4.

**[Table 1]**

| Case | Blank | #1 (Company A) | #2 (Company B) | #3 (Company C) | #4 (Example 1) |
|---|---|---|---|---|---|
| Occurrence level of dew condensation¹⁾ | High | Middle | Middle | Middle | Low |
| 1) Determination criteria for the occurrence of dew condensation: visually observing the degree of condensation of water droplets. | | | | | |

**[Table 2]**

| Case | #1 (Company A) | #2 (Company B) | #3 (Company C) | #4 (Example 1) |
|---|---|---|---|---|
| Surface-inside temperature difference | 3.8 °C | 1.9 °C | 3.1 °C | 9 °C |

Table 1 and Fig. 3 show a comparison of the degree of artificial dew condensation according to water resistance (moisture resistance) when coated with the thermal insulation coating composition according to Example 1 and commercially available products to the same thickness, respectively. It can be seen that in the case of #4 in which the thermal insulation composition of Example 1 is coated, the degree of condensation of water droplets is the lowest.

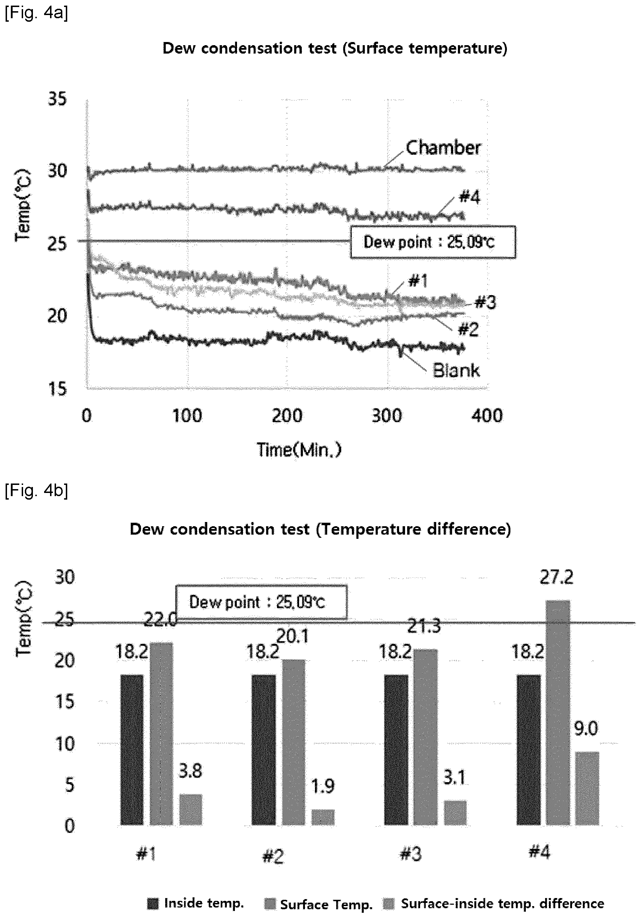

Table 2 and Fig. 4 show a comparison of temperature difference between surface temperature and inside (i.e., chamber) temperature for each coating layer when dew condensation occurs in cases of coating with the thermal insulation coating composition according to Example 1 and commercially available products to the same thickness, respectively. It can be seen that the thermal insulation coating composition of Example 1 has excellent thermal insulation performance through maintaining the temperature of inside of the box higher than the surface temperature.

### Experimental Example 3: Evaluation of adhesion durability according to water resistance

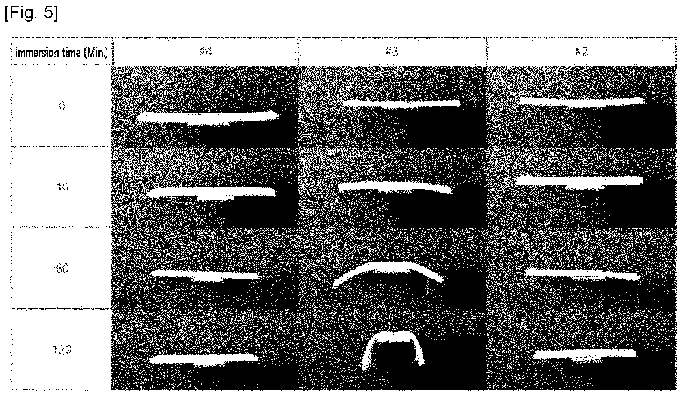

The thermal insulation coating composition prepared in Example 1 and commercially available products were coated to the same thickness of 3 mm on an acrylic plate, respectively, and dried at 25 °C for 24 hours, peeled off, and immersed in water for 120 minutes to evaluate the shape change in the state of being immersed in water. The results are shown in Fig. 5.

In Fig. 5, the product of Company C (#3) started to change the shape of the coating film after 10 minutes of immersion in water and showed poor water resistance, whereas the coating film (#4) of the thermal insulation coating composition according to Example 1 and the product of Company B (#2) exhibited excellent durability without changing shape under the condition of immersion in water for 120 minutes due to good water resistance.

On the other hand, it was confirmed that the coating film (#4) of the thermal insulation coating composition according to Example 1 maintains good adhesion during the immersion in water for 120 minutes, whereas the product of Company B (#2) has gradually decreased adhesion.

As described above, specific parts of the present invention have been described in detail, and it is clear that these specific descriptions are only preferred embodiments for those of ordinary skill in the art to which the present invention pertains, and the scope of the present invention is not limited thereto. Accordingly, the substantial scope of the present invention will be defined by the appended claims and their equivalents.

## Claims

1. A thermal insulation coating composition comprising an aerogel surface-treated with a polyoxyethylene alkyl ether (PEO) of chemical formula 1; a silica filler; an inorganic pigment; a polymer resin; and a dispersion medium, wherein
the silica filler is in the form of glass bubble containing soda lime and borosilicate, and
the surface-treated aerogel and the silica filler has a weight ratio of 1: 4 to 1: 15: 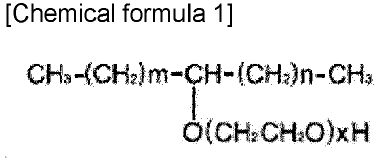
wherein m+n is 9 to 20 and x is 1 to 25.

2. The thermal insulation coating composition according to claim 1, wherein the composition comprises 0.1 to 10.0% by weight of the surface-treated aerogel, 15.0 to 20% by weight of the silica filler, 5.0 to 10.0% by weight of the inorganic pigment, 10.0 to 20.0% by weight of the polymer resin, and 45.0 to 60.0% by weight of the dispersion medium, based on the total weight of the composition.

3. The thermal insulation coating composition according to claim 1, wherein the composition is in the form of a paste having a solid content of 25% to 50%.

4. The thermal insulation coating composition according to claim 1, wherein the polyoxyethylene alkyl ether comprises polyoxyethylene lauryl ether, polyoxyethylene cetyl ether, polyoxyethylene oleyl ether or a mixture thereof.

5. The thermal insulation coating composition according to claim 1, wherein the aerogel comprises a hydrophobic silica aerogel.

6. The thermal insulation coating composition according to claim 1, wherein the polyoxyethylene alkyl ether is used in an amount of 0.7 to 5 parts by weight based on 100 parts by weight of the aerogel.

7. The thermal insulation coating composition according to claim 1, wherein the inorganic pigment comprises dolomite, magnesium carbonate, titanium dioxide, or a mixture thereof.

8. The thermal insulation coating composition according to claim 1, wherein the polymer resin comprises polyvinyl alcohol (PVA), ethylene-vinyl acetate copolymer, cellulose, silicone, acrylate resin, urethane resin, epoxy resin, polyimide or a mixture thereof.

9. The thermal insulation coating composition according to claim 1, wherein the dispersion medium comprises water, ethylene glycol or a mixture thereof.

10. The thermal insulation coating composition according to claim 1, wherein the composition has a thermal conductivity of 0.03 to 0.06 W/m K.

11. A thermal insulation material comprising the thermal insulation coating composition of claim 1.

12. The thermal insulation material according to claim 11, wherein no dew condensation occurs in an artificial dew condensation evaluation test with a refrigerant temperature of 9 °C using the temperature and humidity chamber at a temperature of 30 °C and a humidity of 75%.
